(19) Europäisches Patentamt
European Patent Office
Office européen des brevets

(11) EP 1 231 481 A2

(12) **EUROPÄISCHE PATENTANMELDUNG**

(43) Veröffentlichungstag:
**14.08.2002 Patentblatt 2002/33**

(51) Int Cl.⁷: **G01S 15/10**, G01S 15/93,
G01S 7/523

(21) Anmeldenummer: **01126548.5**

(22) Anmeldetag: **15.11.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **10.02.2001 DE 10106142**

(71) Anmelder: **Valeo Schalter und Sensoren GmbH
74321 Bietigheim-Bissingen (DE)**

(72) Erfinder: **Reiche, Martin
74321 Bietigheim-Bissingen (DE)**

(74) Vertreter: **Dreiss, Fuhlendorf, Steimle & Becker
Patentanwälte
Gerokstrasse 6
70188 Stuttgart (DE)**

(54) **Verfahren zum Betrieb eines Ultraschall-Multisensor-Arrays**

(57) Die Erfindung betrifft ein Verfahren zum Betrieb eines Ultraschall-Multisensor-Arrays insbesondere einer Einparkhilfe eines Kraftfahrzeugs. Das Multisensor-Array weist mindestens zwei entlang dem Umfang des Kraftfahrzeugs angeordneten Sendeeinheiten zum Aussenden von Ultraschallpulsen (3) in einen Überwachungsbereich und mindestens eine Empfangseinheit zum Empfangen von an einem Objekt in dem Überwachungsbereich reflektierten Ultraschallpulsen (4). Mehrere Sendeeinheiten können parallel betrieben werden und zeitgleich zueinander kodierte Ultraschallpulse (3) aussenden. Um auf eine möglichst einfache Weise eine effektive Erhöhung der Empfindlichkeit und der Reichweite der Detektion von Objekten in dem Überwachungsbereich zu erzielen, wird vorgeschlagen, dass zur Kodierung Trägersignale (6) der Ultraschallpulse (3) für die einzelnen zeitgleich betriebenen Sendeeinheiten zumindest während der Pulsdauer unterschiedlich frequenzmoduliert werden und dass die empfangenen kodierten Ultraschallpulse (4) von der mindestens einen Empfangseinheit anhand der Kodierung den einzelnen zeitgleich betriebenen Sendeeinheiten zugeordnet werden.

Fig. 1

EP 1 231 481 A2

**Beschreibung**

Die vorliegende Erfindung betrifft ein Verfahren zum Betrieb eines Ultraschall-Multisensor-Arrays insbesondere einer Einparkhilfe eines Kraftfahrzeugs. Das Ultraschall-Multisensor-Array weist mindestens zwei entlang dem Umfang des Kraftfahrzeugs angeordnete Sendeeinheiten zum Aussenden von Ultraschallpulsen in einen Überwachungsbereich und mindestens eine Empfangseinheit zum Empfangen von an einem Objekt in dem Überwachungsbereich reflektierten Ultraschallpulsen auf. Mehrere Sendeeinheiten können parallel zueinander betrieben werden. Sie senden zeitgleich zueinander kodierte Ultraschallpulse aus.

Die vorliegende Erfindung betrifft außerdem ein Ultraschall-Multisensor-Array insbesondere einer Einparkhilfe eines Kraftfahrzeugs. Das Ultraschall-Multisensor-Array weist mindestens zwei entlang dem Umfang des Kraftfahrzeugs angeordnete Sendeeinheiten zum Aussenden von Ultraschallpulsen in einen Überwachungsbereich und mindestens eine Empfangseinheit zum Empfangen von an einem Objekt in dem Überwachungsbereich reflektierten Ultraschallpulsen auf. Die Sendeeinheiten weisen außerdem mindestens einen Oszillator zur Erzeugung von Trägersignalen der Ultraschallpulse und erste Mittel zur Kodierung der Ultraschallpulse mehrerer zeitgleich betriebener Sendeeinheiten auf.

Es ist aus dem Stand der Technik bekannt, bei Ultraschall-Multisensor-Arrays eine Kodierung von Ultraschallpulsen vorzusehen, um einen zeitlich parallelen Betrieb von mehreren Ultraschallsensoren zu ermöglichen. Durch einen zeitgleichen Betrieb mehrerer Ultraschallsensoren kann die Systemzykluszeit, die zum Aussenden und Empfangen der Ultraschallpulse und zum Verarbeiten der empfangenen Signale sämtlicher Sende-/Empfangseinheiten des Ultraschall-Multisensor-Arrays benötigt wird, reduziert werden.

Es ist des weiteren bekannt, zur Verbesserung des Signal-Rauschabstands und zur Erhöhung der Messreichweite eines Ultraschall-Multisensor-Arrays mehrere aufeinanderfolgende Ultraschallpulse aufzuintegrieren. Auf Grund der verringerten Systemzykluszeit können bei einem zeitgleichen Betrieb mehrerer Ultraschallsensoren mehr Pulse als bei einem zeitlich sequentiellen (zeitgemultiplexten) Betrieb der Sensoren aufintegriert werden. Eine zu hohe Systemzykluszeit und ein geringer Rauschabstand haben bisher den Einsatz von zeitgemultiplexten Ultraschall-Multisensor-Arrays für größere Messreichweiten oberhalb etwa drei Meter bei Einparkhilfen für Kraftfahrzeuge verhindert.

Ein aus dem Stand der Technik bekanntes Konzept für eine Pulskodierung der Ultraschallpulse ist die sog. Pulsfolgenzufallskodierung. Diese hat jedoch den Nachteil, dass die Ultraschallpulse selbst in dem Empfangspfad nicht voneinander unterscheidbar sind. Die einfachen Konzepte setzen deshalb verschiedene kodierte Ultraschallpulsfolgen zur Unterscheidung der Einzelpulse ein.

Die Länge eines Bins dieser Zufallscodes hängt von der minimal erreichbaren Anschwing- und Abklingzeit des ausgesandten Ultraschallpuls-Bursts ab. Eine Kodierung mit einem akzeptablen Störabstand bezüglich einer gegenseitigen Interferrenz parallel betriebener Sendeeinheiten sowie einem Mindestgewinn an Empfindlichkeit und Reichweite durch Pulsintegration mit einem Korrelationsfilter erfordert eine bestimmte Mindestcodelänge. Mit einer Mindestbinlänge von etwa einer Millisekunde (Anschwingzeit etwa 330 µs, Abklingzeit etwa 670 µs) und einem notwendigen Integrationsgewinn von bspw. 17 dB errechnet sich eine Kodierungszykluszeit von etwa 50 ms. Somit ist mit einer einfachen Pulsfolgenzufallskodierung hinsichtlich der Systemzykluszeit nicht viel gewonnen (vgl. Wintzer, Bernhard, "Interference Cancellation in Ultrasonic Sensor Arrays by Stochastic Coding and Adaptive Filtering", FH Mannheim, 1998).

Aus dem Stand der Technik ist es des Weiteren bekannt, nicht nur eine Pulsfolge, sondern die Einzelpulse selbst zu kodieren. Ein Vorschlag für eine Einzelpulskodierung betrifft eine diskrete Frequenzkodierung parallel betriebener Sendeeinheiten. Jeder Sendeeinheit wird also eine unterschiedliche Trägerfrequenz zugewiesen. Der Abstand der Trägerfrequenzen zueinander muss mindestens so groß gewählt werden, dass das Signalnutzband der Sendeeinheit eines Sensors nicht in die Bandbreite einer Empfangseinheit eines anderen parallel betriebenen Sensors fällt. Bei den üblichen Pulslängen von etwa 300 µs errechnet sich so ein Mindestabstand von etwa 6 kHz. Bei drei Sendeeinheiten eines Ultraschall-Multisensor-Arrays umfassen die Resonanzfrequenzen bspw. 32 kHz, 38 kHz und 44 kHz. Dies bedeutet, dass für die Frequenzkodierung unterschiedlich gefertigte Sensoren mit verschiedenen Resonanzfrequenzen (z.B. verschiedenen Wandstärken) hergestellt werden müssen. Diese Produktkomplexität ist sehr aufwendig und teuer.

Als eine weitere Möglichkeit der Kodierung der Ultraschallpulse ist aus dem Stand der Technik außerdem eine Amplitudenmodulation über einen Einzelpuls-Burst oder über mehrere Ultraschallpulse hinweg bekannt. Die Amplitudenmodulation stößt in der Praxis jedoch schnell an ihre Grenzen, da bewegte Objekte ihren Reflektionsquerschnitt über die Zeit schnell ändern und damit ebenfalls zu einer Amplitudenmodulation des reflektierten Signals führen. Außerdem erzeugen mehrere radial benachbarte Überwachungsbereiche oder auch eine Mehrwegausbreitung der Signale eine überlagerte Gesamtreflektion mit nicht vorhersagbarer Amplitudenmodulation.

Ausgehend von dem beschriebenen Stand der Technik ist es die Aufgabe der vorliegenden Erfindung bei einem Ultraschall-Multisensor-Array auf eine möglichst einfache Weise eine effektive Erhöhung der Empfindlichkeit und der Reichweite der Detektion von Objekten in einem Überwachungsbereich zu erzielen.

Zur Lösung dieser Aufgabe schlägt die Erfindung ausgehend von dem Verfahren zum Betrieb eines Ultraschall-Multisensor-Arrays der eingangs genannten Art vor, dass zur Kodierung Trägersignale der Ultraschallpulse für die einzelnen zeitgleich betriebenen Sendeeinheiten zumindest während der Pulsdauer unterschiedlich frequenzmoduliert werden und dass die empfangenen kodierten Ultraschallpulse von der mindestens einen Empfangseinheit anhand der Kodierung den einzelnen zeitgleich betriebenen Sendeeinheiten zuordnet werden.

Die vorliegende Erfindung betrifft Ultraschall-Multisensor-Arrays, bei denen die Sendeeinheiten und die Empfangseinheiten als getrennte Bauteile ausgebildet sind. Die Erfindung betrifft jedoch auch solche Ultraschall-Multisensor-Arrays, bei denen jeweils eine Sendeeinheit und eine Empfangseinheit als ein gemeinsames Wandler-Bauteil (Schallwandler) ausgebildet ist, das zum Aussenden von Ultraschallpulsen elektrisch angeregt wird und das beim Empfang von reflektierten Ultraschallpulsen durch die akkustischen Schwingungen angeregt wird und ein entsprechendes Ausgangssignal erzeugt.

Um eine zu große Produktkomplexität bei der Fertigung der Schallwandler zu vermeiden, bewegt sich die Frequenzmodulationsbandbreite in einer Größenordnung der Bandbreite herkömmlicher Schallwandler.

Erfindungsgemäß wird also eine Frequenzmodulation zur Einzelpulskodierung von zeitgleich betriebenen Sendeeinheiten vorgeschlagen. Die Frequenzmodulation wird nicht durch die Amplitudenmodulation der Objektreflektion beeinflusst. Die Auswirkung einer Frequenzmodulation durch bewegte Objekte (Doppler-Shift) auf das Empfangssignal ist bei den zu erwartenden Objektgeschwindigkeiten und dem Frequenzmodulationshub vernachlässigbar klein. Falls jedoch die Auswirkung der Frequenzmodulation durch bewegte Objekte bei der Detektion der Objekte in dem Überwachungsbereich Berücksichtigung finden soll, kann eine an die verschiedenen Objektgeschwindigkeiten angepasste Filterbank mit mehreren Dopplergates im Empfangspfad eingesetzt werden.

Erfindungsgemäß wird eine analoge Frequenzmodulation mit einem moderaten Hub vorgesehen, die in dem Frequenz und Phasengang des Sendepulses keine Unstetigkeiten vorsieht. Ein Schallwandler zur Erzeugung der Ultraschallsendepulse kann trotz seiner Trägheit einer entsprechenden Anregungsfunktion folgen.

Gemäß einer vorteilhaften Weiterbildung der vorliegenden Erfindung wird vorgeschlagen, dass die Frequenz des Trägersignals einer ersten Sendeeinheit aufmoduliert und die Frequenz des Trägersignals einer zweiten Sendeeinheit abmoduliert wird. Die Frequenz des Trägersignals der ersten Sendeeinheit wird also während der Pulsdauer erhöht und die Frequenz des Trägersignals der zweiten Sendeeinheit während der Pulsdauer verringert. Vorteilhafterweise werden die Frequenzen der Trägersignale linear aufmoduliert und abmoduliert. In Abhängigkeit von der realen Pulsform der Ultraschallpulse kann sich eine von dem linearen Verlauf abweichende Form der Auf- oder Abmodulation, insbesondere hinsichtlich des Störabstands, als vorteilhaft erweisen.

Als eine mögliche Alternative zu einer linearen Auf- bzw. Abmodulation ist insbesondere an eine exponentielle Auf- und Abmodulation der Frequenzen der Trägersignale gedacht.

Vorzugsweise endet sowohl die Auf- als auch die Abmodulation bei der Resonanzfrequenz des Sensors bzw. des Schallwandlers. Dadurch ist eine Frequenzmodulation in einer nicht mehr zwangsgeführten Abklingphase des Ultraschallpulses nicht zu erwarten.

Gemäß einer bevorzugten Ausführungsform der vorliegenden Erfindung wird vorgeschlagen, dass die Frequenz des Trägersignals einer dritten Sendeeinheit konstant gehalten wird. Gemäß dieser Ausführungsform können also bis zu drei Sendeeinheiten zeitgleich zueinander betrieben werden. Die mindestens eine Empfangseinheit kann die empfangenen Ultraschallpulse an Hand der unterschiedlichen Frequenzmodulation (ansteigende, abfallende oder konstante Frequenz des Trägersignals) den drei Sendeeinheiten problemlos zuordnen. Die Empfangseinheit nimmt dabei eine Klassifikation in aufmoduliertes, konstantes oder abmoduliertes Trägersignal vor.

Gemäß einer weiteren bevorzugten Ausführungsform der vorliegenden Erfindung wird vorgeschlagen, dass die empfangenen Ultraschallpulse von der mindestens einen Empfangseinheit gefiltert werden, um sie den einzelnen Sendeeinheiten zuzuordnen. Die Realisierung der notwendigen frequenzabhängigen Laufzeitfilter kann durch Kombination von analogen Band- und Allpässen im Empfangspfad erfolgen. Dabei kann in einem weiteren Pfad, der parallel zu einem bereits vorhandenen Auswertepfad mit Bandpass und Komparator vorgesehen ist, ein Ausgangssignal generiert werden, das eine Aussage darüber ermöglicht, ob die Trägerfrequenz eines empfangenen Ultraschallpulses bei seiner Aussendung aufwärts oder abwärts frequenzmoduliert oder konstant gehalten wurde. Eine Entscheidung darüber erfolgt mittels eines Vergleichers, so dass in dem Ausgangssignal Störfaktoren, insbesondere Amplitudenverzerrungen des Empfangssignals an einem Reflektor der Sende-/Empfangseinheiten, eliminiert sind.

Als eine weitere Lösung der Aufgabe der vorliegenden Erfindung wird ausgehend von dem Ultraschall-Multisensor-Array der eingangs genannten Art vorgeschlagen, dass die Sendeeinheiten einen gemeinsamen Oszillator aufweisen und die ersten Mittel den Oszillator zumindest während der Pulsdauer derart ansteuern, dass die Trägersignale für die einzelnen zeitgleich betriebenen Sendeeinheiten unterschiedlich frequenzmoduliert werden, und dass die mindestens eine Empfangseinheit zweite Mittel zur Zuordnung der empfangenen kodierten Ultraschallpulse den einzelnen zeitgleich betriebenen Sendeeinheiten anhand der Kodierung aufweist.

Gemäß einer vorteilhaften Weiterbildung der vorliegenden Erfindung wird vorgeschlagen, dass der Oszillator derart ansteuerbar ist, dass die Frequenz des Trägersignals einer ersten Sendeeinheit aufmoduliert und die Frequenz des Trägersignals einer zweiten Sendeeinheit abmoduliert wird.

Gemäß einer bevorzugten Ausführungsform der vorliegenden Erfindung wird vorgeschlagen, dass der Oszillator derart ansteuerbar ist, dass die Frequenz des Trägersignals einer dritten Sendeeinheit konstant gehalten wird.

Gemäß einer anderen vorteilhaften Weiterbildung der vorliegenden Erfindung wird vorgeschlagen, dass die zweiten Mittel als Filter zur Filterung der empfangenen Ultraschallpulse ausgebildet sind. Die Realisierung der notwendigen frequenzabhängigen Laufzeitfilter kann durch Kombination von analogen Band- und Allpässen im Empfangspfad erfolgen.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw.

Darstellung in der Beschreibung bzw. in der Zeichnung. Es zeigen:

Figur 1         eine Sende-/Empfangseinheit eines erfindungsgemäßen Ultraschall-Multisensor-Arrays;

Figur 2         einen Ultraschallburst mit einer konstanten Anregungsfrequenz von 38,5 kHz;

Figur 3a        eine ansteigende Frequenzmodulation des Trägersignals gemäß einem erfindungsgemäßen Verfahren;

Figur 3b        eine abfallende Frequenzmodulation des Trägersignals gemäß einem erfindungsgemäßen Verfahren;

Figur 4a        einen Ultraschallburst mit einer nach Figur 3a ansteigenden Anregungsfrequenz des Trägersignals;

Figur 4b        einen Ultraschallburst mit einer nach Figur 3b abfallenden Anregungsfrequenz des Trägersignals;

Figur 5a        ein Betragsspektrum (oben) und einen Phasengang (unten) eines Ultraschallbursts mit einer konstanten Anregungsfrequenz des Trägersignals;

Figur 5b        ein Betragsspektrum (oben) und einen Phasengang (unten) eines Ultraschallbursts mit einer nach Figur 3a linear ansteigenden Anregungsfrequenz des Trägersignals;

Figur 5c        ein Betragsspektrum (oben) und einen Phasengang (unten) eines Ultraschallburst mit einer nach Figur 3b linear abfallenden Anregungsfrequenz des Trägersignals;

Figur 6a        eine Signalantwort eines Ultraschallbursts mit einer konstanten Anregungsfrequenz des Trägersignals für ein Chirp-UP-matched-Filter;

Figur 6b        eine Signalantwort eines Ultraschallbursts mit einer nach Figur 3a linear ansteigenden Anregungsfrequenz des Trägersignals für ein Chirp UP-matched-Filter;

Figur 6c        eine Signalantwort eines Ultraschallbursts mit einer nach Figur 3b linear abfallenden Anregungsfrequenz des Trägersignals für ein Chirp UP-matched-Filter;

Figur 7a        eine Signalantwort eines Ultraschallbursts mit einer konstanten Anregungsfrequenz des Trägersignals für ein Chirp-DOWN-matched-Filter;

Figur 7b        eine Signalantwort eines Ultraschallbursts mit einer nach Figur 3a linear ansteigenden Anregungsfrequenz des Trägersignals für ein Chirp-DOWN-matched-Filter;

Figur 7c        eine Signalantwort eines Ultraschallbursts mit einer nach Figur 3b linear abfallenden Anregungsfrequenz des Trägersignals für ein Chirp-DOWN-matched-Filter;

Figur 8a        eine Signalantwort eines Ultraschallbursts mit einer konstanten Anregungsfrequenz des Trägersignals für ein Chirp-FIX-matched-Filter;

Figur 8b        eine Signalantwort eines Ultraschallbursts mit einer nach Figur 3a linear ansteigenden Anregungsfrequenz des Trägersignals für ein Chirp-FIX-matched-Filter;

Figur 8c      eine Signalantwort eines Ultraschallbursts mit einer nach Figur 3b linear abfallenden Anregungsfrequenz des Trägersignals für ein Chirp-FIX-matched-Filter;

Figur 9a      eine Signalantwort eines Ultraschallbursts mit einer nach Figur 3a linear ansteigenden Anregungsfrequenz des Trägersignals für ein Chirp-DOWN-matched-Filter für farbiges Rauschen;

Figur 9b      eine Signalantwort eines Ultraschallbursts mit einer nach Figur 3b linear abfallenden Anregungsfrequenz des Trägersignals für ein Chirp-DOWN-matched-Filter für farbiges Rauschen;

Figur 10a      eine Signalantwort eines Ultraschallbursts mit einer nach Figur 3a linear ansteigenden Anregungsfrequenz des Trägersignals für ein Chirp-UP-matched-Filter für farbiges Rauschen; und

Figur 10b      eine Signalantwort eines Ultraschallbursts mit einer nach Figur 3b linear abfallenden Anregungsfrequenz des Trägersignals für ein Chirp-UP-matched-Filter für farbiges Rauschen.

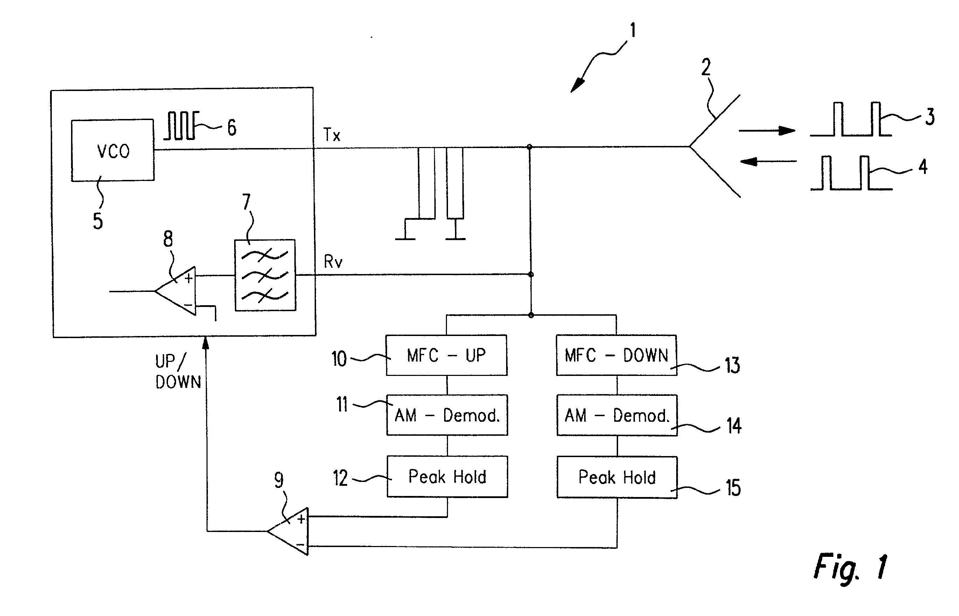

In Figur 1 ist eine Sende-/Empfangseinheit eines erfindungsgemäßen Ultraschall-Multisensor-Arrays für eine Einparkhilfe eines Kraftfahrzeugs in ihrer Gesamtheit mit dem Bezugszeichen 1 bezeichnet. Das Ultraschall-Multisensor-Array umfasst mindestens zwei entlang dem Umfang des Kraftfahrzeugs angeordnete Sende-/Empfangseinheiten 1. Vorzugsweise sind z.B. vier Sende-/Empfangseinheiten 1 eines ersten Ultraschall-Multisensor-Arrays im vorderen Bereich des Kraftfahrzeugs und vier Sende-/Empfangseinheiten 1 eines weiteren Ultraschall-Multisensor-Arrays im hinteren Bereich des Kraftfahrzeugs angeordnet. Auf diese Weise kann beim Einparken ein vorderer Überwachungsbereich und ein hinterer Überwachungsbereich zuverlässig auf Objekte überwacht werden.

Die Sende-/Empfangseinheit 1 umfasst einen Schallwandler 2, der zum Aussenden von Ultraschallpulsen 3 durch ein elektrisches Signal Tx angeregt wird und der beim Empfang von reflektierten Ultraschallpulsen 4 durch die akkustischen Schwingungen angeregt wird und ein entsprechendes Ausgangssignal (Rv) liefert. Die Sende-/Empfangseinheit 1 weist einen Oszillator 5 zur Erzeugung von Trägersignalen 6 der Ultraschallpulse 3, 4 auf. Außerdem umfasst sie einem Auswertepfad mit einem Bandpass 7 und einem Komparator 8 zur Auswertung der empfangenen Ultraschallpulse 4. Mit Hilfe des Bandpasses 7 und des Komparators 8 wird eine Schwellenauswertung ausgeführt. Eine digitale Implementierung der Bauelemente 5, 7, 8 ist ebenfalls denkbar.

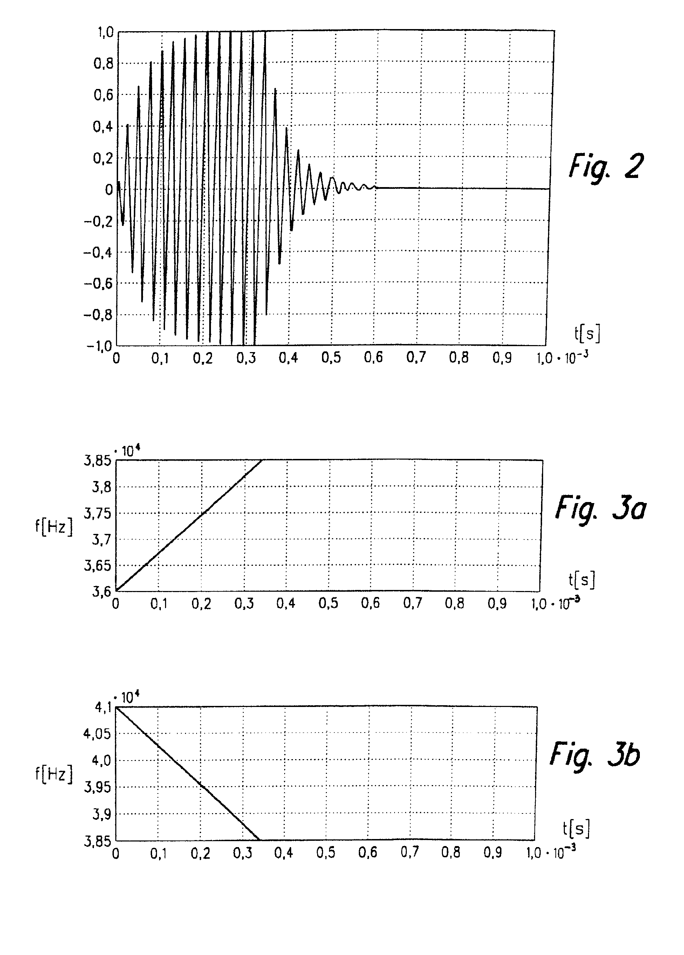

Eine aus dem Stand der Technik bekannte Sende-/Empfangseinheit 1 sendet Ultraschallpulse 3 mit einer konstanten Frequenz des Trägersignals 6 aus. Ein solcher Ultraschallburst mit einer konstanten Anregungsfrequenz von 38,5 kHz und einer normierten Amplitude ist in Figur 2 dargestellt. Die Dauer des Ultraschallpulses 3 liegt bei etwa 35 ms, die Zeitkonstante ist 50 μs.

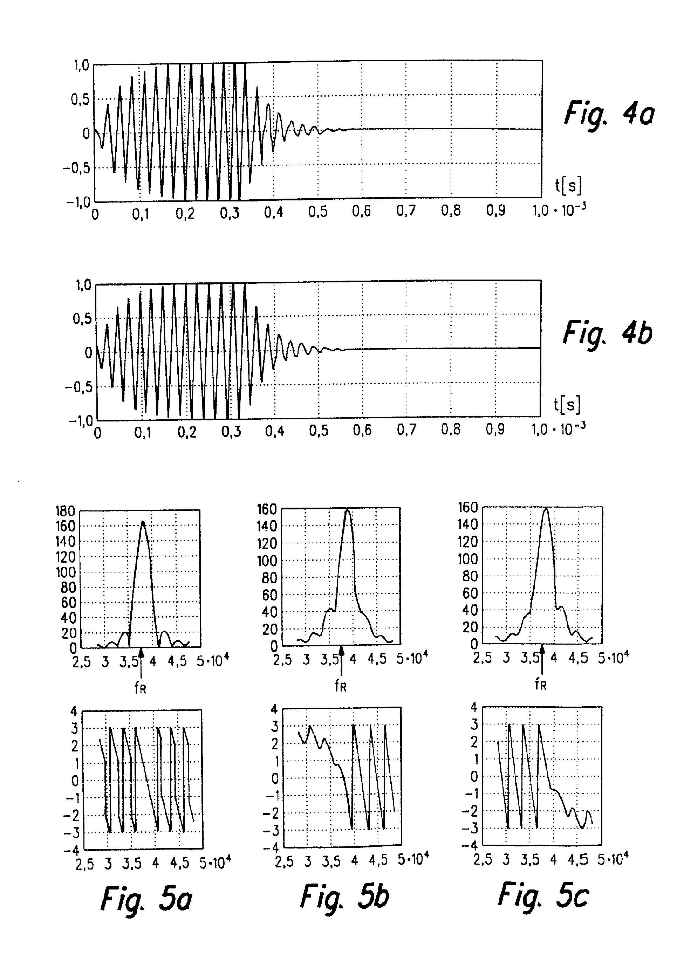

Erfindungsgemäß wird die Frequenz des Trägersignals 6 der Sende-/ Empfangseinheit 1 zumindest während der Dauer des Ultraschallpulses 3 linear ansteigend (vgl. Figur 3a) moduliert. Ein solcher Ultraschallburst mit einer linear ansteigenden Anregungsfrequenz und einer normierten Amplitude ist in Figur 4a dargestellt. Die Frequenz des Trägersignals einer weiteren Sende-/ Empfangseinheit des Ultraschall-Multisensor-Arrays kann parallel dazu linear abfallenden (vgl. Figur 3b) moduliert werden. Ein solcher Ultraschallburst mit einer linear abfallenden Anregungsfrequenz und einer normierten Amplitude ist in Figur 4b dargestellt. Sowohl die Aufmodulation als auch die Abmodulation endet bei der Resonanzfrequenz der Sende/Empfangseinheit von 38,5 kHz (vgl. Figuren 3a, 3b). Den Figuren 4a und 4b ist zu entnehmen, dass sich die ansteigenden und abfallenden Ultraschallbursts im Zeitbereich nur unwesentlich voneinander unterscheiden. Nach etwa 13 Wellenzügen wird die Zwangsanregung beendet und der Schallwandler 2 schwingt auf seiner Resonanzfrequenz aus.

In den Figuren 5a, 5b und 5c sind die Betragsspektren (oben) und der Phasengang (unten) der Ultraschallbursts aus der Figur 2 (konstante Frequenz des Trägersignals; Chirp_FIX), der Figur 4a (ansteigende Frequenz des Trägersignals; Chirp_UP) und Figur 4b (abfallende Frequenz des Trägersignals; Chirp_DOWN) dargestellt. Es fällt auf, dass durch die Frequenzmodulation die Nullstellen des Betragsspektrums mit fester Frequenz verschliffen werden. Interassanter ist jedoch das Verhalten der Phase über die Frequenz (unten).

Bei dem Chirp_FIX ist die Ableitung der Phase (Figur 5a, unten) konstant, also auch die Gruppenlaufzeit konstant über die Frequenz. Dies entspricht dem Verhalten eines Totzeitgliedes, das bis auf eine konstante Totzeit die Form eines Signals nicht verändert.

Die Phase von Chirp_UP (Figur 5b, unten) zeigt, dass die Gruppenlaufzeit über die Frequenz zunimmt. Signaleanteile mit höheren Frequenzen passieren ein Filter mit entsprechender Übertragungsfunktion also langsamer als Signalanteile mit niedrigeren Frequenzen. Für den Chirp_DOWN (Figur 5c, unten) gelten genau die umgekehrten Aussagen.

Erfindungsgemäß ist in der Sende-/Empfangseinheit gemäß Figur 1 parallel zu dem Auswertepfad ein weiterer Pfad vorgesehen, in dem ein Ausgangssignal UP, DOWN generiert wird. Dazu sind in dem weiteren Pfad frequenzabhängige Laufzeitfilter vorgesehen, die durch Kombination von analogen Band- und Allpässen realisiert sind. Das Ausgangssignal UP, DOWN ermöglicht eine Aussage darüber, ob die Frequenz des Trägersignals 6 eines empfangenen Ultraschallpulses 4 bei seiner Aussendung aufwärts oder abwärts frequenzmoduliert wurde. Eine Entscheidung darüber erfolgt mittels eines Vergleichers 9, so dass in dem Ausgangssignal UP, DOWN Störfaktoren, insbesondere Amplitudenverzerrungen der empfangenen Ultraschallpulse 4 an einem Reflektor der Sende-/Empfangseinheit 1, eliminiert sind. Zur Detektion einer aufmodulierten Trägerfrequenz sind in dem weiteren Pfad in einem ersten Block 10 ein sog. matched-Filter-Chirp-UP, in einem zweiten Block 11 ein Tiefpass-Filter und in einem dritten Block 12 Mittel zum Halten des Amplitudenpeaks vorgesehen. Zur Detektion einer abmodulierten Trägerfrequenz sind in dem weiteren Pfad in einem vierten Block 13 ein sog. matched-Filter-Chirp-DOWN, in einem fünften Block 14 ein Tiefpass-Filter und in einem sechsten Block 15 Mittel zum halten des Amplitudenpeaks vorgesehen. Die Tiefpass-Filter 11, 14 extrahieren die Einhüllende der gefilterten Signalantwort eines empfangenen Ultraschallpulses 4.

Die Funktionsweise der matched Filter wird im Folgenden anhand der drei Signale Chirp_FIX, Chirp_UP und Chirp_DOWN im Empfangspfad näher erläutert. Matched Filter haben als Übertragungsfunktion das konjugiert komplexe Spektrum des Signals, das sie mit optimiertem Signalrauschabstand bei angenommenem weißem Rauschen übertragen sollen. Bspw. wird für einen Chirp-UP-matched-Filter die Phase des Chirp_UP Spektrums mit einem negativem Vorzeichen belegt. Ein Chirp_UP Signal über diesen matched Filter erzeugt am Filterausgang das Betragsquadrat des Signalspektrums.

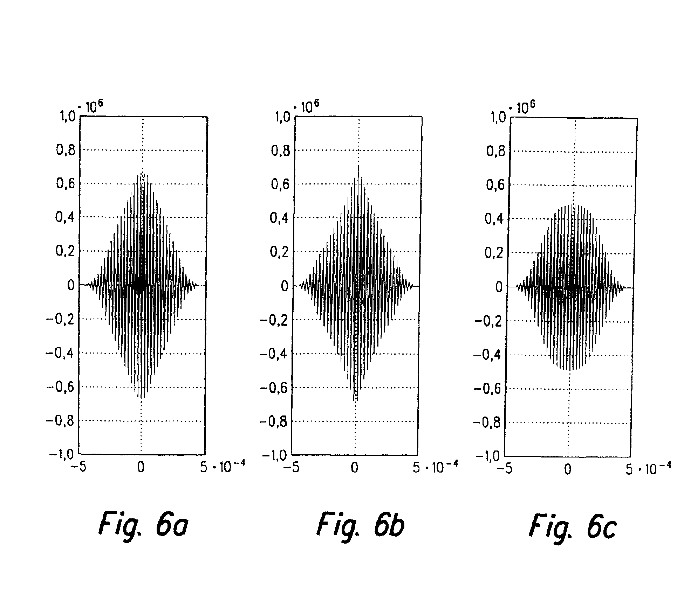

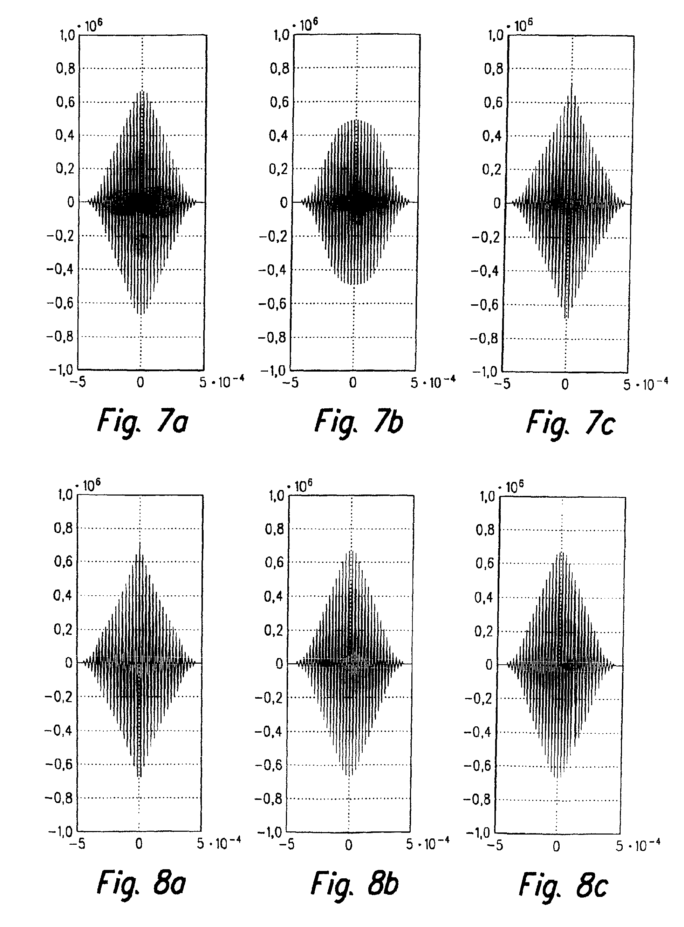

Die Figuren 6a, 6b, 6c zeigen die Signalantworten eines Ultraschallbursts mit einer konstanten Anregungsfrequenz (Figur 6a), einer ansteigenden Frequenz (Figur 6b) und einer abfallenden Frequenz (Figur 6c) des Trägersignals für ein Chirp-UP-matched-Filter. Die Figuren 7a, 7b, 7c zeigen die Signalantworten eines Ultraschallbursts mit einer konstanten Anregungsfrequenz (Figur 7a), einer ansteigenden Frequenz (Figur 7b) und einer abfallenden Frequenz (Figur 7c) des Trägersignals für ein Chirp-DOWN-matched-Filter. Die Figuren 8a, 8b, 8c zeigen die Signalantworten eines Ultraschallbursts mit einer konstanten Anregungsfrequenz (Figur 8a), einer ansteigenden Frequenz (Figur 8b) und einer abfallenden Frequenz (Figur 8c) des Trägersignals für ein Chirp-FIX-matched-Filter. Bei dem Chirp-UP-matched-Filter und dem Chirp-DOWN-matched-Filter ist deutlich zu erkennen, dass sich die Amplitude der Filterantworten für Chirp_UP und Chirp_DOWN um etwa 0,7 zu 0,5, also 2,9 dB, unterscheiden. Das gleiche Verhältnis gilt für die Pulsbreiten.

Der Unterschied von Chirp_UP oder Chirp_DOWN in allen matched Filtern zum unmodulierten Chirp_FIX fällt gering aus (0,7 zu 0,65, also etwa nur 0,6 dB) und ist nicht sehr signifikant. Das ergibt sich zwangsläufig aus der in allen Fällen unmodulierten Burstabklingzeit. Darum empfiehlt es sich u.U., die Kodierung der Trägerfrequenzen auf die linear ansteigende und linear abfallende Frequenzmodulation zu beschränken und auf einen parallelen Betrieb einer weiteren Sende-/Empfangseinheit mit einem Trägersignal einer konstanten Frequenz zu verzichten.

Zur weiteren Optimierung der Unterscheidbarkeit von Chirp_UP und Chirp_DOWN im Empfangspfad kann man den Entwurf eines matched Filters für farbiges Rauschen heranziehen. Dieser hat die Übertragungsfunktion $S*f / |N(f)|^2$. Dabei zieht man als Leistungsspektrum des farbigen Rauschens das Betragsquadrat des Spektrums des jeweils zu unterdrückenden Chirps heran.

$$(|N(f)|^2 \text{ für Chirp-UP-matched-Filter} = |S|^2 \text{ für Chirp\_DOWN})$$

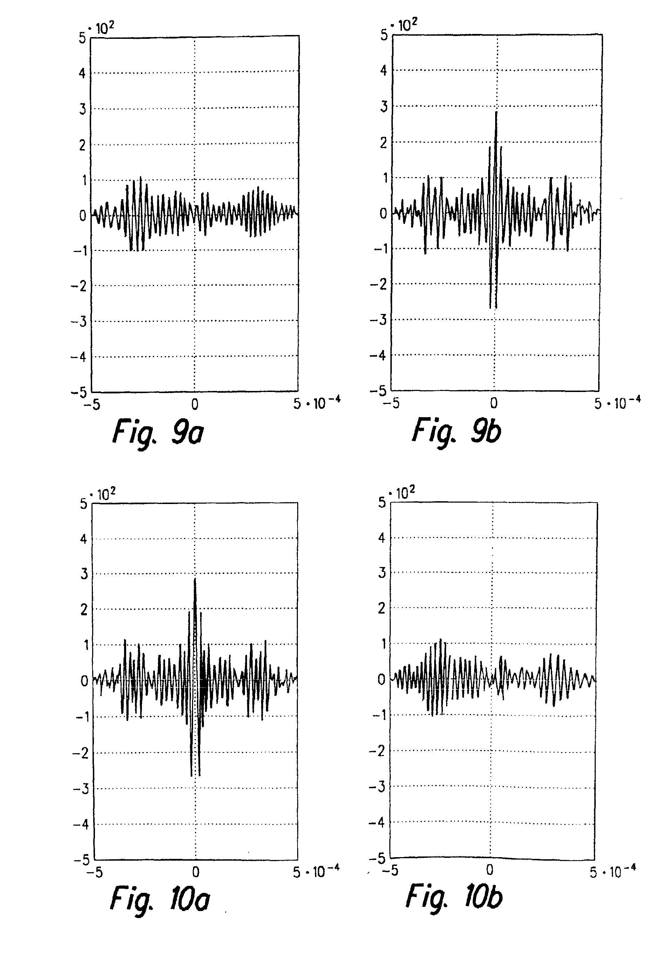

In den Figuren 9a, 9b ist eine Signalantwort eines Ultraschallbursts mit einer ansteigenden Anregungsfrequenz (Figur 9a) und einer abfallenden Frequnez (Figur 9b) des Trägersignals für ein Chirp-DOWN-matched-Filter für farbiges Rauschen dargestellt. In den Figuren 10a, 10b ist eine Signalantwort eines Ultraschallbursts mit einer ansteigenden Anregungsfrequenz (Figur 10a) und einer abfallenden Frequnez (Figur 10b) des Trägersignals für ein Chirp-UP-matched-Filter für farbiges Rauschen dargestellt. Es ist zu erkennen, dass sich die Unterscheidbarkeit mit diesen sog. colored Filtern deutlich verbessert, im vorliegenden Fall um den Faktor 3 auf etwa 9,5 dB.

Zur Realisierung der Verläufe der gewünschten Filterphasen ist es notwendig, die Filterübertragungsfunktionen mit einem Totzeitverhalten ($T\_t > 0,5$ ms) zu belegen, damit die Übertragungsfunktion regulär wird.

In Tietze, Ulrich: Halbleiter-Schaltungstechnik, 9. Aufl., 1989, Kapitel 14 sind sog. Allpässe zweiter Ordnung ausführlich beschrieben. Dort ist außerdem ein Ausdruck der Gruppenlaufzeit in Abhängigkeit der normierten Frequenz angegeben. Durch eine Kette von Allpässen und Bandpässen und deren entsprechende Auslegung kann dann obiges Idealverhalten der colored Filter approximiert werden. Auf das Kapitel 14 in dem angegebenen Fachbuch wird ausdrücklich Bezug genommen.

Durch die symmetrische Auslegung wird ein Burst ohne Modultaion in den obigen farbigen Chirp-UP- bzw. Chirp-DOWNmatched-Filtern zu keinem signifikanten Amplitudenunterschied zwischen den Kanälen führen. Damit lassen sich also unmodulierte Nachklingeffekte (z.B. durch Bürstenbildung an der Kontaktlitze) als Fehlersignale aussortieren.

**Patentansprüche**

1. Verfahren zum Betrieb eines Ultraschall-Multisensor-Arrays insbesondere einer Einparkhilfe eines Kraftfahrzeugs, mit mindestens zwei entlang dem Umfang des Kraftfahrzeugs angeordneten Sendeeinheiten zum Aussenden von Ultraschallpulsen (3) in einen Überwachungsbereich und mindestens einer Empfangseinheit zum Empfangen von an einem Objekt in dem Überwachungsbereich reflektierten Ultraschallpulsen (4), wobei mehrere Sendeeinheiten parallel betrieben werden und zeitgleich zueinander kodierte Ultraschallpulse (3) aussenden, **dadurch gekennzeichnet, dass** zur Kodierung Trägersignale (6) der Ultraschallpulse (3) für die einzelnen zeitgleich betriebenen Sendeeinheiten zumindest während der Pulsdauer unterschiedlich frequenzmoduliert werden und dass die empfangenen kodierten Ultraschallpulse (4) von der mindestens einen Empfangseinheit anhand der Kodierung den einzelnen zeitgleich betriebenen Sendeeinheiten zugeordnet werden.

2. Verfahren nach Anspruch 1, **dadurch gekennzeichnet, dass** die Frequenz des Trägersignals (6) einer ersten Sendeeinheit aufmoduliert (Chirp_UP) und die Frequenz des Trägersignals (6) einer zweiten Sendeeinheit abmoduliert (Chirp_DOWN) wird.

3. Verfahren nach Anspruch 1 oder 2, **dadurch gekennzeichnet, dass** die Frequenz des Trägersignals (6) einer dritten Sendeeinheit konstant gehalten wird (Chirp_FIX).

4. Verfahren nach Anspruch 2, **dadurch gekennzeichnet, dass** die Frequenzen der Trägersignale (6) linear aufmoduliert und abmoduliert werden.

5. Verfahren nach Anspruch 2, **dadurch gekennzeichnet, dass** die Frequenzen der Trägersignale (6) exponentiell aufmoduliert und abmoduliert werden.

6. Verfahren nach einem der Ansprüche 1 bis 5, **dadurch gekennzeichnet, dass** die empfangenen Ultraschallpulse (4) von der mindestens einen Empfangseinheit gefiltert werden, um sie den einzelnen Sendeeinheiten zuzuordnen.

7. Ultraschall-Multisensor-Array insbesondere einer Einparkhilfe eines Kraftfahrzeugs, mit mindestens zwei entlang dem Umfang des Kraftfahrzeugs angeordneten Sendeeinheiten zum Aussenden von Ultraschallpulsen (3) in einen Überwachungsbereich und mindestens einer Empfangseinheit zum Empfangen von an einem Objekt in dem Überwachungsbereich reflektierten Ultraschallpulsen (4), wobei die Sendeeinheiten mindestens einen Oszillator (5) zur Erzeugung von Trägersignalen (6) der Ultraschallpulse (3, 4) und erste Mittel zur Kodierung der Ultraschallpulse (3) mehrerer zeitgleich betriebener Sendeeinheiten aufweisen, **dadurch gekennzeichnet, dass** die Sendeeinheiten einen gemeinsamen Oszillator (5) aufweisen und die ersten Mittel den Oszillator (5) zumindest während der Pulsdauer derart ansteuern, dass die Trägersignale (6) für die einzelnen zeitgleich betriebenen Sendeeinheiten unterschiedlich frequenzmoduliert werden, und dass die mindestens eine Empfangseinheit zweite Mittel zur Zuordnung der empfangenen kodierten Ultraschallpulse (4) den einzelnen zeitgleich betriebenen Sendeeinheiten anhand der Kodierung aufweist.

8. Ultraschall-Multisensor-Array nach Anspruch 7, **dadurch gekennzeichnet, dass** der Oszillator (5) derart ansteuerbar ist, dass die Frequenz des Trägersignals (6) einer ersten Sendeeinheit aufmoduliert (Chirp_UP) und die Frequenz des Trägersignals (6) einer zweiten Sendeeinheit abmoduliert (Chirp_DOWN) wird.

9. Ultraschall-Multisensor-Array nach Anspruch 7, **dadurch gekennzeichnet, dass** der Oszillator (5) derart ansteuerbar ist, dass die Frequenz des Trägersignals (6) einer dritten Sendeeinheit konstant gehalten wird (Chirp_FIX).

10. Ultraschall-Multisensor-Array nach einem der Ansprüche 7 bis 9, **dadurch gekennzeichnet, dass** jeweils eine Sendeeinheit und eine Empfangseinheit zu einer gemeinsamen Sende-/Empfangseinheit (1) mit einem Schallwandler (2) zusammengefasst sind.

11. Ultraschall-Multisensor-Array nach einem der Ansprüche 7 bis 10, **dadurch gekennzeichnet, dass** die zweiten Mittel als Filter (10, 11; 13, 14) zur Filterung der empfangenen Ultraschallpulse (4) ausgebildet sind.

Fig. 1

EP 1 231 481 A2

*Fig. 2*

*Fig. 3a*

*Fig. 3b*

Fig. 4a

Fig. 4b

Fig. 5a

Fig. 5b

Fig. 5c

Fig. 6a

Fig. 6b

Fig. 6c

Fig. 7a

Fig. 7b

Fig. 7c

Fig. 8a

Fig. 8b

Fig. 8c

**Fig. 9a**

**Fig. 9b**

**Fig. 10a**

**Fig. 10b**